# FASCICULE DE BREVET EUROPEEN

(11) **EP 2 651 607 B1**
(45) Date de publication et mention de la délivrance du brevet: **21.01.2015**
(21) Numéro de dépôt: 11787856.1
(22) Date de dépôt: 22.11.2011
(51) Int. Cl.: B25J 9/16, B62D 57/032

(54) **ROBOT HUMANOIDE DOTE D'UN GESTIONNAIRE DE SES RESSOURCES PHYSIQUES ET VIRTUELLES, PROCEDES D'UTILISATION ET DE PROGRAMMATION**
HUMANOIDER ROBOTER MIT MANAGER DER PHYSISCHEN UND VIRTUELLEN RESSOURCEN DAFÜR SOWIE VERFAHREN ZUR VERWENDUNG UND PROGRAMMIERUNG
HUMANOID ROBOT PROVIDED WITH A MANAGER FOR THE PHYSICAL AND VIRTUAL RESOURCES THEREOF, AND METHODS FOR USE AND PROGRAMMING

(30) Priorité: 17.12.2010 FR 1060755
(43) Date de publication de la demande: 23.10.2013
(73) Titulaire: Aldebaran Robotics S.A., 75014 Paris (FR)
(72) Inventeur: MAZEL, Alexandre, F-94270 Kremlin Bicetre (FR); HOUSSIN, David, F-93100 Montreuil (FR); MONCEAUX, Jérôme, F-75013 Paris (FR)
(74) Mandataire: Nguyen Van Yen, Christian
(86) Numéro de dépôt international: PCT/EP2011/070684
(87) Numéro de publication internationale: WO 2012/079926

(56) Documents cités:
- EP-A1- 1 486 300
- US-A1- 2005 240 412

## Description

La présente invention appartient au domaine des robots humanoïdes. Plus précisément, elle s'applique à la gestion des ressources dudit robot, notamment lorsque plusieurs utilisateurs de ce robot programment de manière indépendante des comportements destinés à être mis en oeuvre par ledit robot.

Un robot peut être qualifié d'humanoïde à partir du moment où il possède certains attributs de l'apparence et des fonctionnalités de l'homme: une tête, un tronc, deux bras, deux mains, deux jambes, deux pieds... Au-delà de l'apparence, les fonctions qu'un robot humanoïde est capable de remplir vont dépendre de sa capacité à effectuer des mouvements, à parler et à « raisonner ». Des robots humanoïdes sont capables de marcher, de faire des gestes, avec les membres ou avec la tête. La complexité des gestes qu'ils sont capables d'effectuer augmente sans cesse. Des gestes coordonnés entre eux ou coordonnés avec des paroles (par exemple un bras levé, des paroles menaçantes prononcées sur un ton rauque), des signaux émis par des parties du robot (notamment ses LED) peuvent être l'expression de comportements du robot qui traduisent ses « émotions » (par exemple, la colère). Certains robots, notamment le robot NAO, qui est la plateforme sur laquelle ont été développés les concepts et les moyens de mise en oeuvre de la présente invention, offrent la possibilité à plusieurs utilisateurs de développer des comportements de manière indépendante l'un de l'autre. Ces possibilités sont grandement améliorées avec des outils de développement en langage utilisateur, tels que le logiciel Chorégraphe. En conséquence, se pose le problème de savoir comment assurer la cohérence des différents comportements, programmés par des utilisateurs différents, au moment de leur exécution, notamment pour éviter les conflits dans l'utilisation des ressources matérielles et logicielles du ou des robots, assurer la synchronisation de la disponibilité des ressources qui doivent être utilisées concomitamment et gérer les priorités d'exécution d'un certain nombre de fonctions.

Il est traditionnel en robotique d'assurer une protection des moteurs et d'interdire leur utilisation simultanée par plusieurs comportements ; c'est un premier type de solution à ce problème général de gestion de ressources, mais il ne s'agit pas là d'une solution générale : en particulier, ce type de solution n'apporte pas de réponse au problème posé par la synchronisation de ressources différentes, ni au problème de la libération des ressources.

Il est traditionnel pour résoudre ces problèmes d'allocation de ressources dans le temps dans d'autres domaines de la technologie de mettre en oeuvre des mécanismes d'optimisation dans l'allocation de ressources, utilisant notamment des algorithmes de type programmation logique par contraintes. Ces algorithmes sont cependant adaptés aux calculs de l'allocation de ressources qui ne sont pas consommées immédiatement car ils sont gourmands en ressources de calcul. En particulier, ils ne pourraient être utilisés sur un robot humanoïde doté de multiples comportements que pour une toute petite partie de ceux-ci.

Le document EP-A1-1 486 300 (Sony Corporation) décrit un tel robot humanoïde.

Il n'existe donc pas dans l'art antérieur de solution permettant de résoudre le problème de l'allocation de ressources matérielles, logicielles ou d'autres types à des processus indépendants. La présente invention résout ce problème en procurant une définition hiérarchique de ressources couplée avec un mécanisme de résolution locale ou décentralisé.

A cet effet, la présente invention divulgue un robot humanoïde apte à exécuter une pluralité de comportements sous le contrôle d'un module de gestion embarqué comprenant un sous-module de gestion d'une pluralité de ressources qui peuvent être affectées à l'exécution desdits comportements, ledit robot étant caractérisé en ce que ladite pluralité de comportements et ladite pluralité de ressources sont organisés chacune en sous-ensembles hiérarchiques et en ce que ledit sous-module de gestion des ressources est apte à être programmé pour réserver au moins une ressource appartenant à au moins un sous-ensemble de ressources à l'exécution d'au moins un comportement appartenant à au moins un sous-ensemble de comportements, ladite réservation pouvant être programmée pour être héritée par ledit sous-ensemble de comportements et/ou s'appliquer audit sous-ensemble de ressources.

Avantageusement, ledit sous-module de gestion de la pluralité de ressources est programmé pour répondre, lorsqu'un premier comportement est en cours d'exécution, à une requête de ressource par un deuxième comportement par au moins une des actions suivantes : refus de mise à disposition de ladite ressource audit deuxième comportement, mise à disposition immédiate de ladite ressource audit deuxième comportement, exécution d'au moins une action supplémentaire puis mise à disposition de ladite ressource audit deuxième comportement, mise en pause du premier comportement en cours d'exécution puis mise à disposition de ladite ressource audit deuxième comportement.

Avantageusement, ledit sous-module de gestion de la pluralité de ressources est programmé pour que, lorsque l'action de refus de mise à disposition de ladite ressource requise par ledit deuxième comportement est exécutée, ledit deuxième comportement exécute à nouveau une requête de mise à disposition selon une fréquence prédéfinie jusqu'à expiration d'une période d'expiration également prédéfinie.

Avantageusement, ledit sous-module de gestion de la pluralité de ressources est programmé pour, lorsqu'au moins deux comportements exécutent une requête de mise à disposition d'une même ressource, le premier des au moins deux comportements est prioritaire dans la réservation de ladite même ressource lorsque cette dernière est relâchée.

Avantageusement, ledit sous-module de gestion de la pluralité de ressources est programmé pour, lorsqu'au moins un comportement exécute une requête de mise à disposition d'au moins deux ressources, lesdites au moins deux ressources sont regroupées en une nouvelle ressource traitée comme ressource unique, ledit regroupement étant ordonné de manière unique pour tous les comportements exécutant des requêtes de ressources identiques.

Avantageusement, ledit sous-module de gestion de la pluralité de ressources est programmé pour, lorsqu'un comportement parent réserve au moins une ressource sans l'utiliser, ladite au moins une ressource peut être utilisée par un comportement enfant dudit comportement parent.

Avantageusement, ledit sous-module de gestion de la pluralité de ressources est programmé pour, lorsqu'un premier comportement enfant utilise une ressource réservée par ledit comportement parent, un deuxième comportement enfant du même parent doit, pour pouvoir utiliser ladite ressource, effectuer une requête de mise à disposition de ladite ressource auprès du premier comportement enfant.

Avantageusement, ledit sous-module de gestion de la pluralité de ressources est programmé pour, lorsqu'un comportement parent relâche une ressource dont il est réservataire, ladite ressource doit être relâchée par tout comportement enfant dudit parent.

Avantageusement, ledit sous-module de gestion de la pluralité de ressources est programmé pour, lorsqu'un sous-ensemble de ressources a une disponibilité réduite, réaliser une réservation desdites ressources pour un comportement virtuel défini en fonction de ladite réduction de disponibilité.

Avantageusement, ledit sous-module de gestion de la pluralité de ressources est programmé pour relâcher ladite réservation en fonction de l'évolution de l'état de ladite réduction de disponibilité.

Avantageusement, la pluralité de ressources comprend au moins une variable d'état, ladite au moins une variable devant être dans un état prédéfini pour être réservée, ladite réservation étant nécessaire à l'exécution d'au moins un comportement.

Avantageusement, la pluralité de ressources comprend au moins un ressource accumulative et en ce qu'un taux d'utilisation de celle-ci est affecté aux comportements programmés pour utiliser ladite au moins une ressource.

Avantageusement, la pluralité de ressources comprend au moins une ressource essentielle et une ressource non essentielle, tout comportement devant faire appel à la au moins une ressource essentielle ne pouvant s'exécuter si ladite ressource essentielle n'est pas disponible et pouvant s'exécuter s'il doit faire appel à la dite au moins une ressource non essentielle, même si celle-ci n'est pas disponible.

L'invention divulgue également un procédé de gestion des ressources d'un robot humanoïde apte à exécuter une pluralité de comportements sous le contrôle d'un module de gestion embarqué, ledit procédé comprenant une étape de réservation d'une pluralité de ressources qui peuvent être affectées à l'exécution desdits comportements, ledit procédé étant caractérisé en ce que ladite pluralité de comportements et ladite pluralité de ressources sont organisés chacune en sous-ensembles hiérarchiques et en ce que ladite étape de réservation affecte au moins une ressource appartenant à au moins un sous-ensemble de ressources à l'exécution d'au moins un comportement appartenant à au moins un sous-ensemble de comportements, ladite réservation pouvant être programmée pour être héritée par ledit sous-ensemble de comportements et/ou s'appliquer audit sous-ensemble de ressources.

L'invention divulgue également un programme d'ordinateur comprenant des instructions de code de programme permettant l'exécution dudit procédé lorsque le programme est exécuté sur un ordinateur, ledit programme étant adapté pour permettre la gestion des ressources d'un robot humanoïde apte à exécuter une pluralité de comportements sous le contrôle d'un sous-programme de gestion embarqué, ledit sous-programme comprenant un module apte à exécuter une fonction de réservation d'une pluralité de ressources qui peuvent être affectées à l'exécution desdits comportements, ledit programme étant caractérisé en ce que ladite pluralité de comportements et ladite pluralité de ressources sont organisés chacune en sous-ensembles hiérarchiques et en ce que ladite fonction de réservation affecte au moins une ressource appartenant à au moins un sous-ensemble de ressources à l'exécution d'au moins un comportement appartenant à au moins un sous-ensemble de comportements, ladite réservation pouvant être programmée pour être héritée par ledit sous-ensemble de comportements et/ou s'appliquer audit sous-ensemble de ressources.

Avantageusement, lesdits sous-ensembles de comportements et de ressources sont définis comme classes d'objets.

L'invention divulgue aussi un procédé de développement d'un module de gestion des ressources d'un robot humanoïde et un programme d'ordinateur pour mettre en oeuvre ledit procédé.

L'invention offre en outre l'avantage d'éviter les situations de blocage qui sont fréquentes dans les systèmes informatiques à processus s'exécutant en parallèle sur un même processeur. Elle permet également de gérer des types de ressources très différents, y compris des ressources virtuelles correspondant à des états, dont le gel permet d'éviter le lancement de comportements qui seraient susceptibles de créer une situation de blocage ou de danger pour le robot.

L'invention sera mieux comprise et ses différentes caractéristiques et avantages ressortiront de la description qui suit de plusieurs exemples de réalisation et de ses figures annexées dont :
- La figure 1 est un schéma de l'architecture fonctionnelle selon laquelle est mise en oeuvre l'invention dans plusieurs de ses modes de réalisation ;
- Les figures 2a et 2b sont des vues d'écran d'un programme informatique permettant la mise en oeuvre de l'invention dans plusieurs de ses modes de réalisation;
- Les figures 3a et 3b représentent des modalités de gestion de ressource, respectivement sous forme de liste de ressources disponibles et sous forme de programmation graphique par boîtes, dans plusieurs modes de réalisation de l'invention ;
- Les figures 4a et 4b représentent un mécanisme de synchronisation de ressources de différents types, respectivement sous forme d'organigramme fonctionnel et sous forme de menu graphique déroulant, dans plusieurs modes de réalisation de l'invention ;
- Les figures 5a et 5b représentent un mécanisme de réservation de ressources critiques, respectivement sous forme d'organigramme fonctionnel et sous forme de menu graphique déroulant, dans plusieurs modes de réalisation de l'invention ;
- Les figures 6a et 6b représentent un mécanisme d'héritage d'une réservation de ressources, respectivement sous forme de menu graphique déroulant et sous forme de programmation graphique par boîtes, dans plusieurs modes de réalisation de l'invention ;
- Les figures 7a, 7b et 7c illustrent la problématique de la gestion des ressources absentes, respectivement en représentant un robot complet, un robot tronc et une liste de ressources disponibles/indisponibles, dans plusieurs modes de réalisation de l'invention ;
- Les figures 8a à 8e illustrent plusieurs modalités de résolution de conflits, respectivement sous forme d'organigramme fonctionnel (8a) et sous forme de menus graphiques déroulants correspondants à différentes options de sortie d'un conflit (8b à 8e), dans plusieurs modes de réalisation de l'invention;
- La figure 9 illustre l'utilisation des ressources état sous forme de menu graphique déroulant, dans plusieurs modes de réalisation de l'invention ;
- La figure 10 représente un organigramme fonctionnel de l'utilisation d'une ressource accumulative partagée, dans plusieurs modes de réalisation de l'invention.

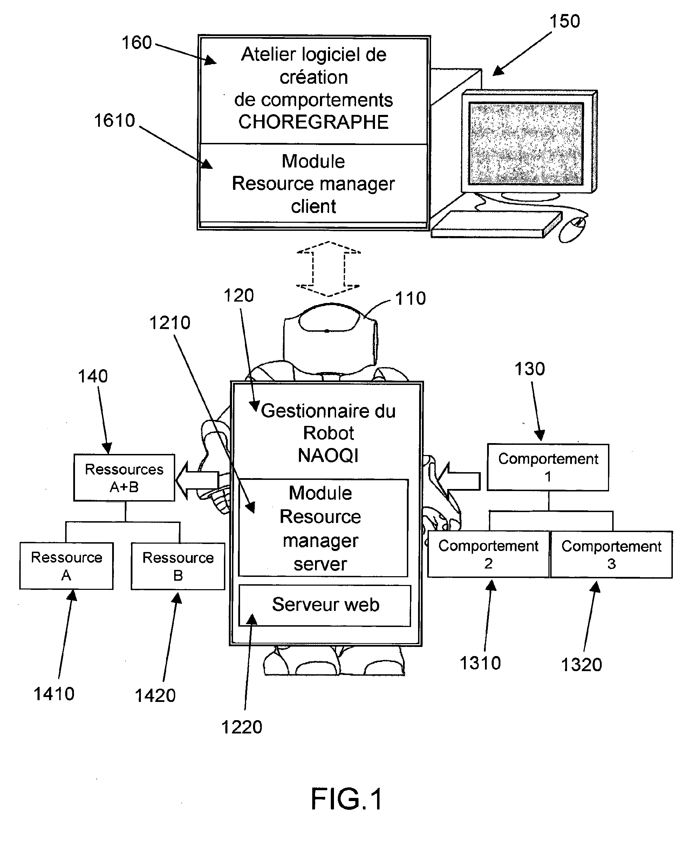

La figure 1 est un schéma de l'architecture fonctionnelle selon laquelle est mise en oeuvre l'invention dans plusieurs de ses modes de réalisation. L'architecture physique sous-jacente est constituée d'un robot humanoïde 110, dont un exemple de réalisation est donné ci-dessous et, éventuellement, d'une station de travail distante 150 équipée d'un atelier logiciel de création de comportements 160.

On connaît un robot humanoïde de marque commerciale NAO™. Un tel robot a été divulgué notamment dans la demande de brevet WO2009/124951 publiée le 15/10/2009. Cette plateforme a servi de base aux améliorations qui ont conduit à la présente invention. Dans la suite de la description, ce robot humanoïde peut être indifféremment désigné sous cette appellation générique ou sous sa marque commerciale NAO™, sans que la généralité de la référence en soit modifiée. Ce robot comprend environ deux douzaines de cartes électroniques de commande de capteurs et d'actionneurs qui pilotent les articulations. Une articulation a normalement au moins deux degrés de liberté et donc deux moteurs. Chaque moteur est piloté en angle. L'articulation comporte également plusieurs capteurs de position, notamment des MRE (Magnetic Rotary Encoder). La carte électronique de contrôle comporte un microcontrôleur du commerce. Ce peut être par exemple un DSPIC™ de la société Microchip. C'est un MCU 16 bits couplé à un DSP. Ce MCU a un cycle d'asservissement en boucle d'une ms. Le robot peut également comporter d'autres types d'actionneurs, notamment des LED (Diodes électroluminescentes) dont la couleur et l'intensité peuvent traduire les émotions du robot. Celui-ci peut également comporter d'autres types de capteurs de position, notamment une centrale inertielle, des FSR (Capteurs de pression au sol).

La tête comporte l'intelligence du robot, notamment la carte qui exécute les fonctions de haut niveau qui permettent au robot d'accomplir les missions qui lui sont assignées. Le processeur de la carte peut être un processeur x86 du commerce. On choisira de manière privilégiée un processeur à basse consommation tel que le Geode™ de la société AMD (32 bits, 500 MHz). La carte comporte également un ensemble de mémoires RAM et flash. Cette carte gère également les communications du robot avec l'extérieur (serveur de comportements, autres robots...), normalement sur une couche de transmission WiFi, WiMax, éventuellement sur une réseau public de communications mobiles de données avec des protocoles standards éventuellement encapsulés dans un VPN. Le processeur est normalement piloté par un OS standard ce qui permet d'utiliser les langages de haut niveau usuels (C, C++, Python, ...) ou les langages spécifiques de l'intelligence artificielle comme URBI (langage de programmation spécialisé dans la robotique) pour la programmation des fonctions de haut niveau.

Une autre carte est logée dans le tronc du robot. C'est là que se situe le calculateur qui assure la transmission aux cartes de contrôle des articulations des ordres calculés par la carte de la tête. Le calculateur de cette carte est également un processeur du commerce. Ce peut avantageusement être un processeur 32 bits du type ARM 9™ cadencé à 100 MHz. Le type du processeur, sa position centrale, proche du bouton de marche/arrêt, sa liaison au contrôle de l'alimentation en font un outil bien adapté pour la gestion de l'alimentation du robot (mode veille, arrêt d'urgence, ...). La carte comporte également un ensemble de mémoires RAM et flash.

L'intelligence du robot est implantée selon une architecture logicielle spécifique, qui constitue un véritable système d'exploitation et de gestion des interfaces du robot, 120, dénommé NAOQI. Cette architecture a été divulguée notamment dans la demande de brevet WO2009/124955 publiée le 15/10/2009. Les modules logiciels composant cette architecture comprennent les fonctions système de gestion des communications entre un robot et un PC ou un site distant et d'échange de logiciels qui fournissent l'infrastructure logicielle nécessaire à la mise en oeuvre de la présente invention. Cette architecture comporte les fonctions nécessaires à la gestion des fonctions de base du robot, telles que se mouvoir, bouger un membre, interpréter les signaux d'un capteur ou envoyer des signaux via un actuateur. Elle permet également à un utilisateur du robot d'implanter dans la mémoire embarquée de celui-ci des programmes logiciels de commande de l'exécution par le robot de comportements 130, 1310, 1320, qui peuvent être des gestes, y compris des gestes coordonnés complexes tels que des pas de danse, des paroles ou des émotions, ces dernières étant en général des combinaisons de gestes, de paroles et d'émission de signaux par des actuateurs tels que des LED.

Pour l'exécution de ces comportements, le robot devra faire appel à des ressources 140, 1410, 1420. La présente invention porte sur les modalités de gestion des dites ressources pour permettre une exécution non conflictuelle des comportements. Elle est mise en oeuvre pour l'essentiel dans le module de gestion des ressources ou « Ressource manager server », 1210, le fonctionnement détaillé de ce module étant décrit dans la suite de la présente description.

Il est possible de programmer les comportements à exécuter par le robot sur un terminal distant tel que la station de travail 150, en utilisant n'importe quel logiciel dont le langage cible sera C, C++, Python ou Urbi. Pour mettre en oeuvre la présente invention, on utilisera cependant avantageusement une architecture fonctionnelle spécifique d'édition et de programmation des comportements d'un robot humanoïde. Une telle architecture a été décrite par la demande de brevet PCT/EP2010/057111 déposée le 25/05/2010. L'atelier logiciel d'édition et de programmation des comportements d'un robot humanoïde, 160, permettant de mettre en oeuvre ladite architecture est commercialement dénommé Chorégraphe™, et peut être désigné indifféremment pas son nom générique ou par son nom commercial, sans altérer la généralité des références. Cette architecture est particulièrement efficace pour générer des comportements de robot car elle permet de réaliser facilement une articulation des commandes déclenchées par des évènements avec leur dimension temporelle. Les commandes déclenchées par des évènements sont représentées dans Chorégraphe par des Boxes ou « Boîtes » ou « Boîtes de commande ». Une Boîte est une structure de programmation arborescente qui peut comprendre un ou plusieurs des éléments ci-dessous qui sont définis ensuite:
- Une « Timeline » ou axe temporel de Trames;
- Un « Diagram » ou Diagramme de flux ;
- Un Script.

Les Boîtes de commande sont normalement reliées entre elles par des connections qui transmettent le plus souvent une information d'évènement d'une Boîte à l'autre. Toute Boïte est reliée directement ou indirectement à une « Boîte racine » ou Root qui initialise le scénario de comportement/mouvement du robot.

Un axe temporel de Trames représente la contrainte temporelle à laquelle sont soumis les comportements et les mouvements du robot définis dans la Boîte dans laquelle le dit Axe temporel de Trames ou Timeline est inséré. La Timeline réalise ainsi la synchronisation des comportements et mouvements de la Boîte. Elle est découpée en frames (Trames) auxquelles est associée une vitesse de déroulement définie en nombre de Trames par seconde ou Frames Per Second (FPS). Le FPS de chaque Timeline est paramétrable par l'utilisateur. Par défaut, le FPS peut être fixé à une valeur donnée, par exemple 15 FPS.

Une Timeline peut comprendre : i) une ou plusieurs Behavior Layers ou « Couches de comportement » comprenant chacune une ou plusieurs Behavior Key Frames ou « Trames principales de comportement », qui peuvent comprendre elles-mêmes un ou plusieurs Diagrams ou « Diagrammes de flux », qui sont en fait des ensembles de Boîtes qui peuvent également être rattachées directement à une Boîte de niveau supérieur, sans passer par une Couche de comportement ni une Timeline; ii) une ou plusieurs Motion Layers ou « Couches de mouvement », comprenant chacune une ou plusieurs Motion Key Frames ou «Trames principales de mouvement » qui peuvent comprendre un ou plusieurs Motion Screens ou « Ecrans de mouvement ».

Un Diagramme de flux est un ensemble de Boîtes connectées entre elles, comme détaillé plus loin. Chacune des Boîtes peut à son tour comprendre d'autres Timeline auxquelles sont rattachées de nouvelles Couches de comportement ou de mouvement.

Un Script est un programme directement exécutable par le robot. Dans le cadre de la présente invention, les Scripts sont de manière privilégiée écrits en langage C++. Une Boîte qui comprend un Script ne comprend pas d'autre élément.

Le logiciel peut être implanté sur un PC ou une autre plateforme de type ordinateur personnel utilisant un système d'exploitation Windows™, Mac™ ou Linux™.

Dans le cadre de la présente invention, des écrans spécifiques de Chorégraphe, pouvant être considérés comme un module de Chorégraphe dénommé « Resource manager client», 1610 permet la programmation des règles de gestion des ressources de robots humanoïdes tels que NAO en générant des scripts qui seront embarqués dans le module Resource manager server, 1210. La conception des Boîtes de Chorégraphe, qui peuvent être contenues les unes dans les autres, est particulièrement avantageuse pour la mise en oeuvre de la présente invention. En effet, le comportement de plus haut niveau, 130, de la figure 1, que l'on peut qualifier de comportement parent, pourra comporter par exemple deux comportements enfants, 1310, 1320, qui pourront être codés graphiquement (drag and drop de Boîtes préprogrammées et de connexions entre elles) par des Boîtes qui seront incluses dans la Boîte du comportement parent. Les ressources élémentaires 1410, 1420, qui désignent par exemple la ressource Jambe gauche et la ressource Jambe droite, peuvent être regroupées en une ressource unique Membres inférieurs, 140. Jambe gauche et Jambe droite sont elles-mêmes des ressources composites comprenant chacune une cuisse, un genou, un bas de jambe, une cheville, un pied, chacun de ces sous-ensembles pouvant lui-même comprendre un ou plusieurs moteurs, un ou plusieurs capteurs, un ou plusieurs actuateurs. Chorégraphe gère par le biais des Timeline la synchronisation des ressources en supposant que celles dont les comportements ont besoin seront disponibles. Chorégraphe, sans le Resource manager server de la présente invention, ne gère pas la mise à disposition des ressources.

Les conflits de mise à disposition des ressources de bas niveau telles que les moteurs peuvent être résolus par des algorithmes classiques de type « exclusion mutuelle » ou mutex. De tels algorithmes ont la caractéristique commune d'exclure la prise d'une ressource gérée de cette manière par deux processus simultanés. Les algorithmes de ce type diffèrent notamment par les mécanismes de gestion des priorités et des attentes. De tels algorithmes ne permettent cependant pas de résoudre facilement des conflits de plus haut niveau, lorsque des processus doivent accéder à des ressources composites. Par ailleurs, une solution à ce problème ne peut être envisagée dans le recours à des algorithmes d'optimisation d'affectation de ressources, compte tenu de la constante de temps nécessairement très courte des comportements d'un robot pour qu'il ait une apparence humaine, de la consommation de CPU desdits algorithmes et de la faiblesse des ressources de calcul embarquées sur le robot.

Une autre difficulté du problème de gestion de ressources résolu dans le cadre de la présente invention est que plusieurs utilisateurs peuvent programmer des comportements indépendamment l'un de l'autre et implanter chacun leurs comportements sur un même robot (à condition bien sûr qu'ils disposent des droits pour ce faire).

Comme détaillé tout au long de la description, l'architecture de comportements et de ressources et les fonctions de gestion des relations entre ces entités permettent notamment, dans le cadre de la présente invention : d'éviter les conflits de ressource (deux comportements ne peuvent pas utiliser le même moteur en même temps, deux comportements qui manipulent une même balle ne peuvent pas s'exécuter en même temps) ; de synchroniser l'utilisation de ressources différentes (pour dire bonjour, on utilise un bras et l'audio ; ces deux ressources doivent être disponibles en même temps pour obtenir un comportement cohérent) ; de gérer les différents modèles de robot (par exemple, un robot sans bras, avec des jambes, avec des roues...) et un robot ayant des organes en panne ou fonctionnant en mode dégradé (économie d'énergie); d'éviter les deadlock ou situations de blocages sur l'attribution de ressources dans un système multi-thread (dans lequel plusieurs processus s'exécutent en parallèle) ;de disposer d'un mécanisme de résolution de conflit ; d'assurer la disponibilité des ressources pour les comportements critiques ; de protéger le robot quelque soient les comportements (ne pas tomber par exemple).

Le Resource manager server 1210 assure la disponibilité des ressources. Il a une structure de données hiérarchique dans le cadre d'un développement objet: un objet ou un comportement parent peut réserver des ressources, les comportements enfants sont alors assurés d'obtenir les ressources. Il permet également de résoudre rapidement les conflits: La résolution est décentralisée/locale ce qui permet de s'affranchir de la complexité mathématique et algorithmique (temps de calcul) d'un moteur de résolution de contraintes. Celui qui génère le conflit résout le conflit, le Resource manager client ne fait aucun calcul.

Le Resource manager server comprend des mécanismes permettant d'éviter les blocages/deadlock dans un système multithread (par exemple, gestion unitaire d'un groupe de ressources - ie tous les moteurs - comme une simple ressource - ie : un moteur. Le système est également générique: contrairement à d'autres systèmes dans lesquels la fonctionnalité et les ressources sont imbriquées, le Ressource manager peut gérer n'importe quel type de ressource et n'est pas lié à une fonctionnalité. On peut comparer l'approche traditionnelle à des sémaphores/mutex qui protègent une donnée précise dans une fonctionnalité sans autoriser un niveau supplémentaire d'abstraction comme c'est le cas du Resource manager de la présente invention (synchronisation de ces différentes ressources).

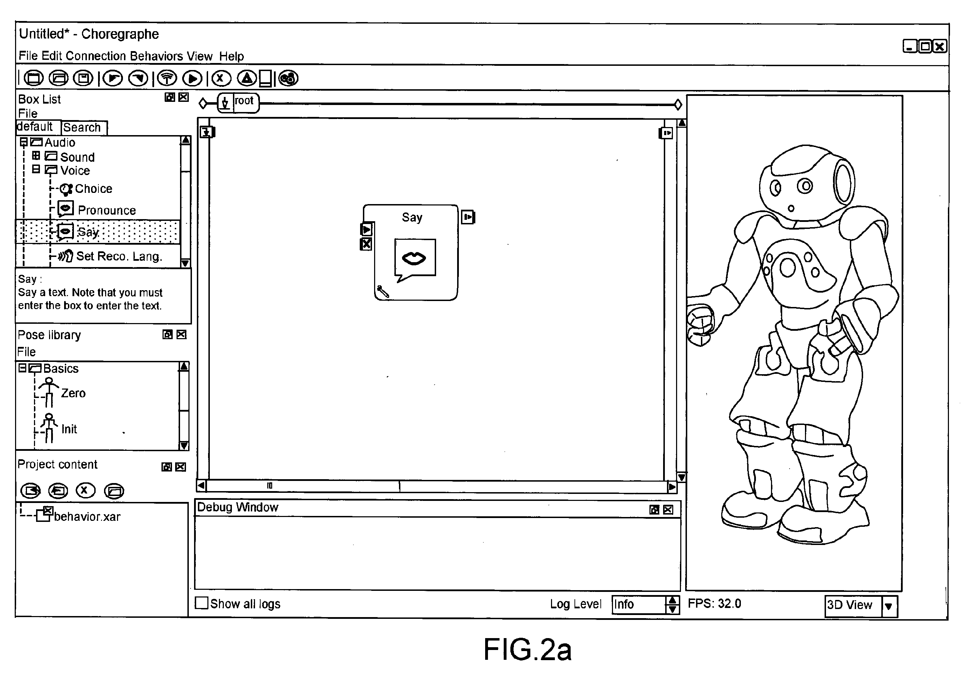

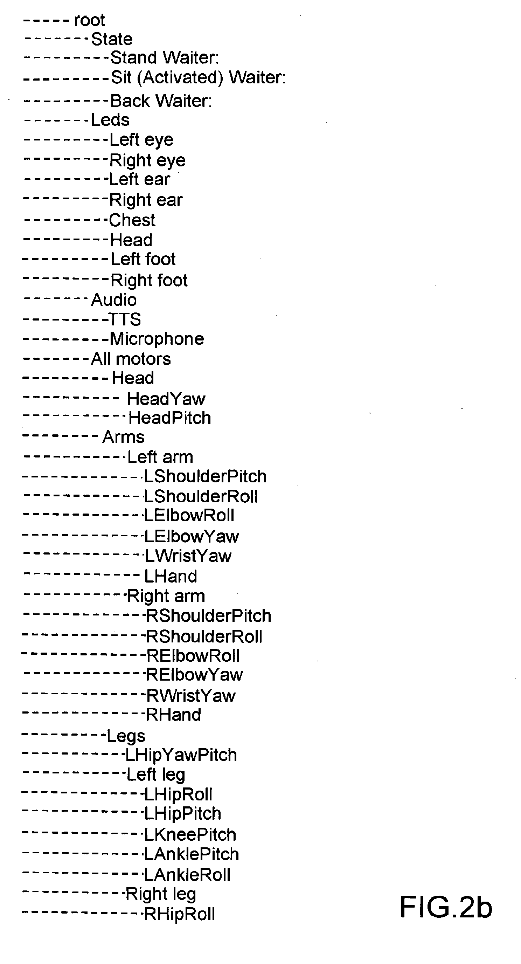

Les figures 2a et 2b sont des vues d'écran d'un programme informatique permettant la mise en oeuvre de l'invention dans plusieurs de ses modes de réalisation.

Sur la figure 2a est représenté un écran Chorégraphe. Le module Chorégraphe 160 charge sur le robot les comportements 130, 1310, 1320 ainsi que les ressources 140, 1410, 1420 utilisées par lesdits comportements, les règles de réservation desdites ressources ayant été définies au préalable dans le Resource manager client, 1610, selon des modalités qui seront détaillées dans la suite de la description. Un Resource manager server, 1210, est le correspondant sur le robot du Resource manager client.

Lorsque Chorégraphe fait référence au ressources, il les demande au serveur du robot (ou à un robot simulé sur PC). A chaque exécution, le code de Chorégraphe est transféré sur le robot.

Un fichier d'initialisation représenté sur la figure 2b liste l'ensemble des ressources du robot. Le robot comporte avantageusement un serveur web, 1220, qui, sur requête du client, 1610, retourne la liste des ressources à la station 150, ladite liste pouvant être visualisée dans le Resource manager client, 1610. Ladite liste peut être visualisée par Chorégraphe (Chorégraphe client du robot) ou un browser web (page web client du robot). On notera cependant que l'invention peut tout à fait être mise en oeuvre sans recours à Chorégraphe, ni à un module Resource manager client, 1610. Dans ce cas, la station serveur 150 envoie des comportements au robot, lesdits comportements étant interprétés par le module NAOQI, 120, et se procure la liste des ressources sur le serveur, 1220, la hiérarchisation des comportements et les regroupements de ressources étant effectués dans le Resource manager server, 1210.

Ainsi, le Ressource manager server, 1210, est un module du robot, sous-ensemble de NAOQI, qui définit l'ensemble des ressources disponibles. Un comportement contient des actions (mouvement, audio, vidéo). Il est codé en C++ ou Python, ou réalisé graphiquement (encapsulation de Python ou C++). Le serveur web du robot peut retourner sur un browser la liste des ressources ainsi que les comportements qui les utilisent et ceux qui attendent la disponibilité d'une ressource. Les ressources étant hiérarchiques, l'utilisateur peut facilement occuper le haut, le bas, une jambe du robot sans connaître le détail des moteurs situés dans chacune de ces parties.

Une API (Application Programming Interface) permet d'utiliser le Resource manager 1210 en C++, en python (C++ wrappé) ou dans le langage graphique (encapsulation du C++ ou du python) et de générer les commandes suivantes :
- Prendre ou attendre une ressource unique, soit
   *void waitForResource (const string& ressourceName, const string& ownerName, const string& callbackName, const int& timeoutSeconds);*
- Prendre ou attendre une ressource unique en donnant des informations hiérarchiques entre les comportements (dans la suite de la description, les comportements qui réservent des ressources sont appelés « Owners ») soit
   *void waitForLocalResourcesTree (const vector<string>& ressourceName, const class AL::ALPtr<class AL::ALHierarchyOwner>& treeOwnerPtr, const string& callbackName, const int& timeoutSeconds);*
- Relâcher une resource, soit
   *void releaseResource (const string& resourceName, const string& ownerName).*

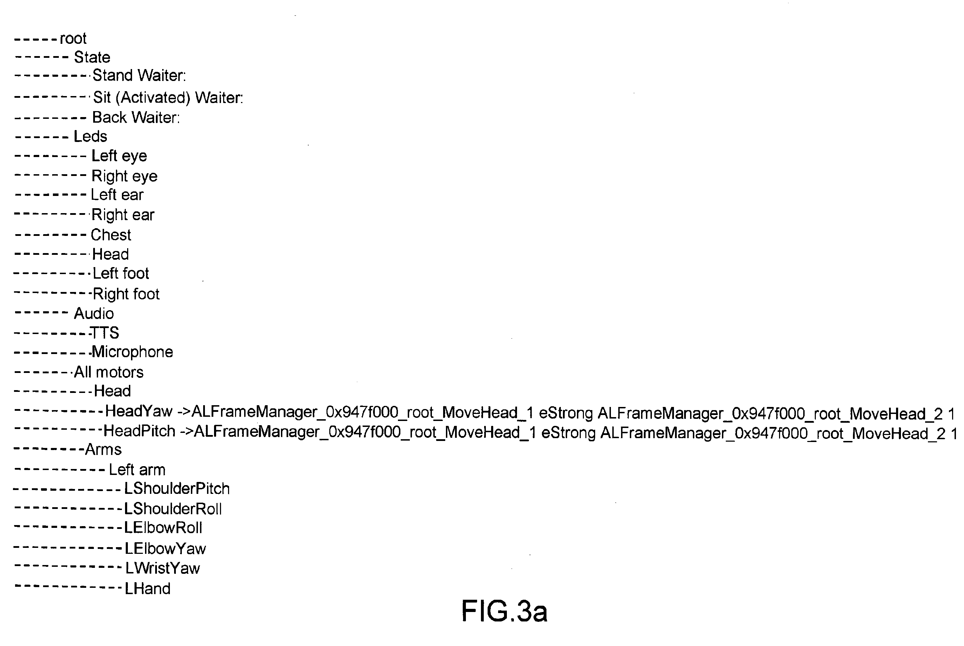

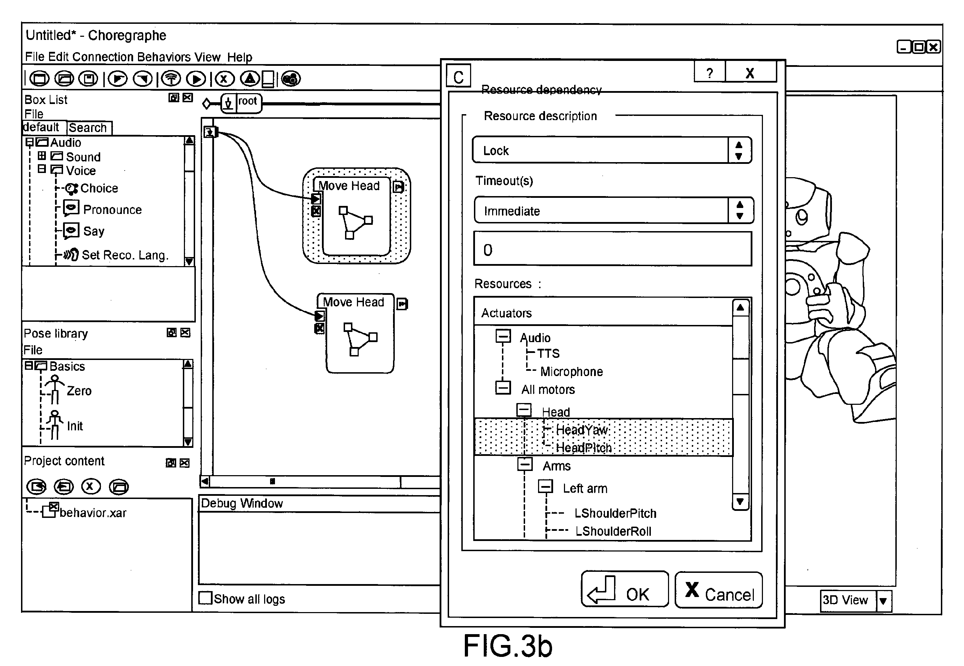

Les figures 3a et 3b représentent des modalités de gestion de ressource, respectivement sous forme de liste de ressources disponibles et sous forme de programmation graphique par boîtes, dans plusieurs modes de réalisation de l'invention.

Ces figures illustrent le principe des traitements appliqués à la gestion des conflits sur une ressource simple.

Dans le cas d'une ressource simple (un moteur par exemple), il s'agit d'éviter tout deadlock. Seule la liste des ressources est protégée à l'aide d'un algorithme de type mutex et ce mutex est utilisé dans l'ajout ou la suppression de ressource. Le conflit lui-même (attente de la libération d'une ressource) n'est pas protégé tout en étant thread-safe. Les mutex sont un système de protection de la librairie standard afin de rendre une application thread-safe (accessible sur un système parallèle avec plusieurs thread). En revanche, ils n'empêchent pas les deadlock. Nous utilisons donc uniquement les mutex afin de protéger la liste des ressources. La résolution du conflit ne fait pas appel au système de blocage que sont les mutex mais elle est cependant thread-safe.

La résolution de conflit dans la réservation de ressources est faite par application des principes suivants : i) dans un système multi-thread, deux Owners ne peuvent pas prendre la même ressource au même moment ; nous protégeons donc la demande par un try-lock qui est une tentative non bloquante d'acquérir une ressource verrouillée par un mutex ; ii) lorsque deux Owner demandent la même ressource exactement au même moment (défini par le scheduler de l'OS), tous les Owners doivent résoudre le conflit mais seul le premier obtient la ressource lorsque qu'elle est libre (premier arrivé, premier servi).

Un exemple de ce type est illustré par la liste des ressources de la figure 3a et les Boîtes et la vue de l'écran de définition de relations de dépendances de Chorégraphe de la figure 3b.

Dans cet exemple MoveHead1 possède la ressource. MoveHead2 attend la ressource. Un MoveHead3 attendrait également la ressource mais MoveHead2 l'obtiendrait en premier (premier arrivé et premier servi). L'affectation de la ressource est réalisée par un smart-pointer (pointeur intelligent comprenant un code encapsulé exécuté sur les ressources pointées ce qui évite l'utilisation d'un mutex (l'affectation doit être atomique pour l'OS).

Si deux thread exécutent A = B (ou dans le cas de l'application illustrée, OwnerRessourceA = nouveau_Owner), alors la ligne de code A = B doit être protégée par un mutex, sinon l'application s'interrompt au moment où deux thread l'exécutent. Or nous ne voulons pas utiliser de mutex pour résoudre ce conflit. Cependant, dans certains cas, A = B n'a pas besoin d'etre protégé, notamment, si A et B sont des types atomiques (de type entier, float...) qui ne peuvent jamais provoquer une interruption de A=B par un autre thread (et provoquer un crash de l'application). C'est pourquoi dans OwnerRessourceA = nouveau_Owner, ownerRessourceA et nouveau_Owner sont des entiers (des pointeurs). Ainsi, en l'absence de mutex, notre application ne peut pas se bloquer (deadlock).

L'algorithme est alors du type:
Attendre Ressource-tete
Détection des demandes simultanées par un try-lock
résolution du conflit (attente ou timeout)
si je suis le premier entrant d'après le try-lock:
   pointer-sur-mon-ancien-owner = pointer-sur-mon-nouveau-owner sinon résoudre encore le conflit.

Dans Chorégraphe, on utilise les Boîtes MoveHead. Les deux mouvements de tête sont parallèles et chacun d'entre eux référence les mêmes moteurs. Ici, l'option lock signifie que les autres demandeurs seront mis en attente dans la limite de leur timeout.

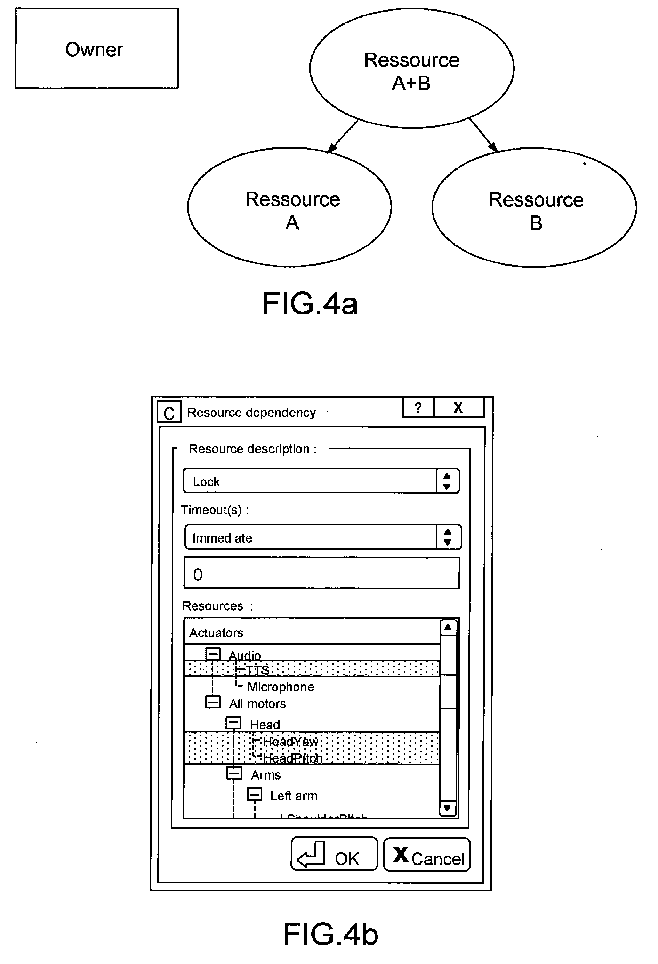

Les figures 4a et 4b représentent un mécanisme de synchronisation de ressources de différents types, respectivement sous forme d'organigramme fonctionnel et sous forme de menu graphique déroulant, dans plusieurs modes de réalisation de l'invention.

Ces figures illustrent le cas où un même Owner (comportement, objet) demande plusieurs ressources qui doivent être disponibles pour qu'il puisse s'exécuter. Un Owner peut être une Boite Chorégraphe mais également un objet C++ (au sens orienté-objet) qui possède également des propriétés hiérarchiques.

L'objet ou le comportement est en attente ou a préalablement réservé une ressource. Lorsqu'un Owner demande plusieurs ressources, une nouvelle ressource unique référençant les sous-ressources est créée. Cette nouvelle ressource permet de traiter de la même façon chaque ressource (un moteur par exemple) et le groupe de ressource (même timeout). Ce mécanisme, illustré par l'organigramme fonctionnel de la figure 4a, permet surtout d'arrêter l'attente de toutes les ressources si une seule n'est pas disponible. Le procédé de l'invention évite ainsi les blocages (deadlock).

En revanche, l'algorithme suivant ne fonctionnerait pas:
prendre (Liste_ressources)

Pour chaque ressource
demander_et_prendre la ressource

Comme illustré sur la figure 4b, dans Chorégraphe, on opère la sélection de plusieurs ressources ce qui conduit à l'appel de la méthode waitResources (liste des ressources, owner, callback, timeout) et à la génération de la nouvelle ressource unique référençant la liste des ressources initialement sélectionnées.

De plus, la liste de ressources est avantageusement ordonnée afin d'éviter certains timeout inutiles ; dans l'exemple illustré sur la figure 4b, dans lequel la ressource A est le traitement de signal audio (Audio-TTS) et la ressource B est un mouvement de pitch du bras gauche (Arm-Left arm-ShoulderPitch) :
Owner 1 (thread1) demande A+B: Owner 1 prend A et attend B,
Owner 2 (thread2) demande B+A: Owner 2 prend B et attend A.

Sans un tri des ressources, aucune commande n'est envoyée au robot. Avec un tri:
Owner 1 (thread1) demande A+B: Owner 1 prend A, Owner 1 prend B, ce qui permet l'exécution de la commande.
Owner 2 (thread2) demande A+B: Owner 2 attend A jusqu'au timeout, ou jusqu'au relâchement de la resource A+B par Owner 1.

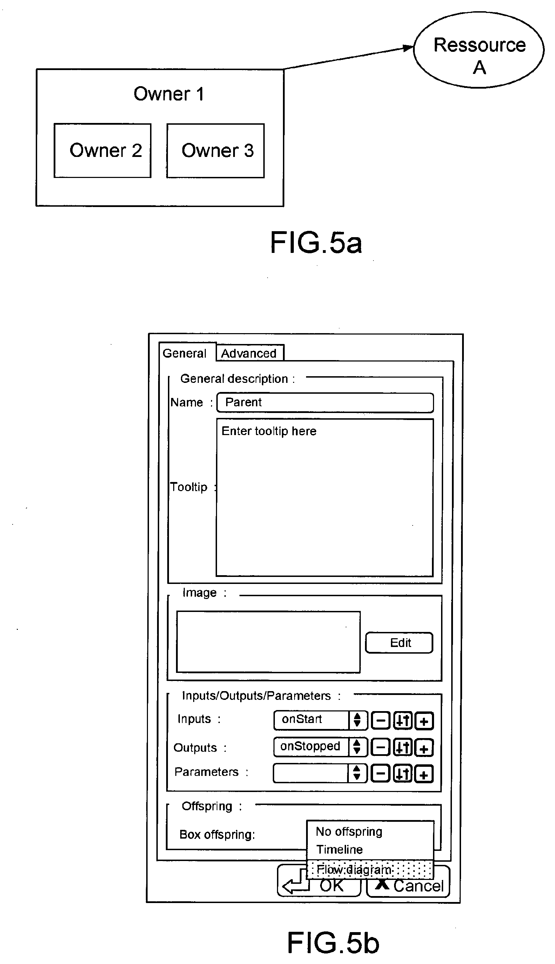

Les figures 5a et 5b représentent un mécanisme de réservation de ressources critiques, respectivement sous forme d'organigramme fonctionnel et sous forme de menu graphique déroulant, dans plusieurs modes de réalisation de l'invention.

Certaines ressources doivent être disponibles pour des comportements critiques (rechargement de la batterie par exemple). Cette disponibilité est assurée par un héritage objet des ressources. Un objet ou comportement parent peut réserver des ressources. Ces ressources seront alors disponibles pour les enfants, en revanche, les enfants se disputeront ces ressources.

Comme illustré sur l'organigramme fonctionnel de la figure 5a, Owner 1 n'utilise pas forcement les ressources, il les occupe pour les objets ou comportements enfants. L'algorithme du ressource manager impose à tout enfant de rendre ses ressources quand il les relâche lui-même. Autrement dit, résoudre un conflit avec un enfant oblige, si l'enfant relâche ces ressources, à résoudre le conflit avec le parent également.

Comme illustré sur la figure 5b, dans Chorégraphe, une Boite parent de type Diagramme de flux (objet hiérarchique pour le Ressource manager serveur ou Boite contenant des Boites) est créée:

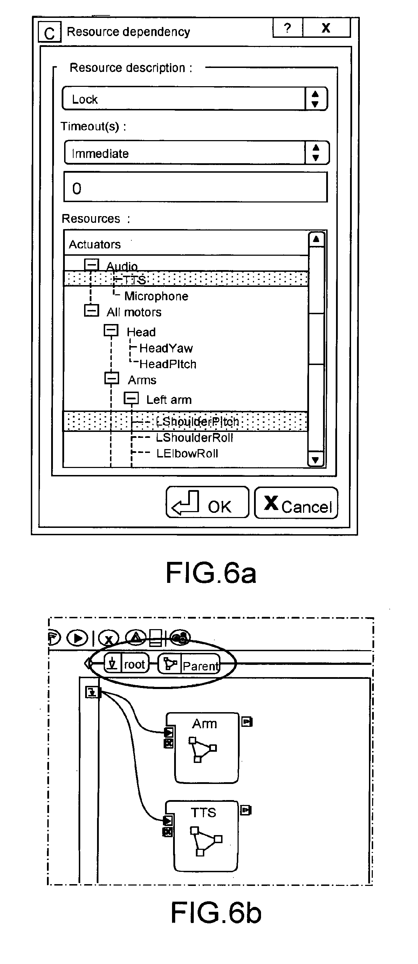

Les figures 6a et 6b représentent un mécanisme d'héritage d'une réservation de ressources, respectivement sous forme de menu graphique déroulant et sous forme de programmation graphique par boîtes, dans plusieurs modes de réalisation de l'invention.

Dans le cas de mise en oeuvre de l'invention illustré par ces deux figures, le parent Owner 1 réserve une ressource A+B (A = TTS et B = Arms-LeftArm-ShoulderPitch).

Les Boites (comportements Owner 2, Owner3) encapsulées dans le parent Owner 1 ont cette ressource composite à leur disposition et le premier qui la requiert peut l'utiliser immédiatement

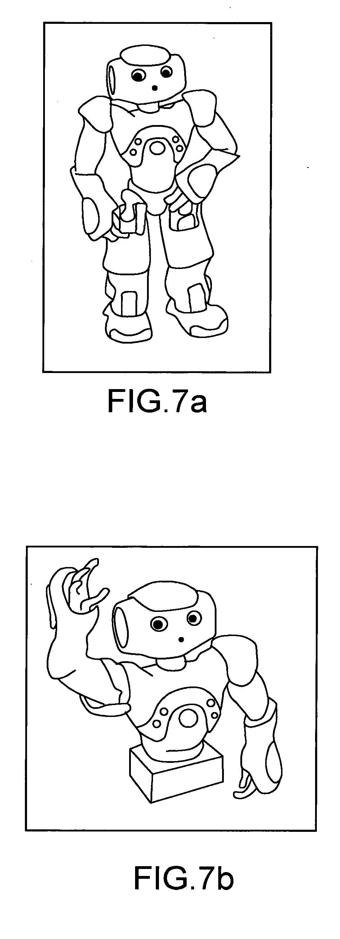

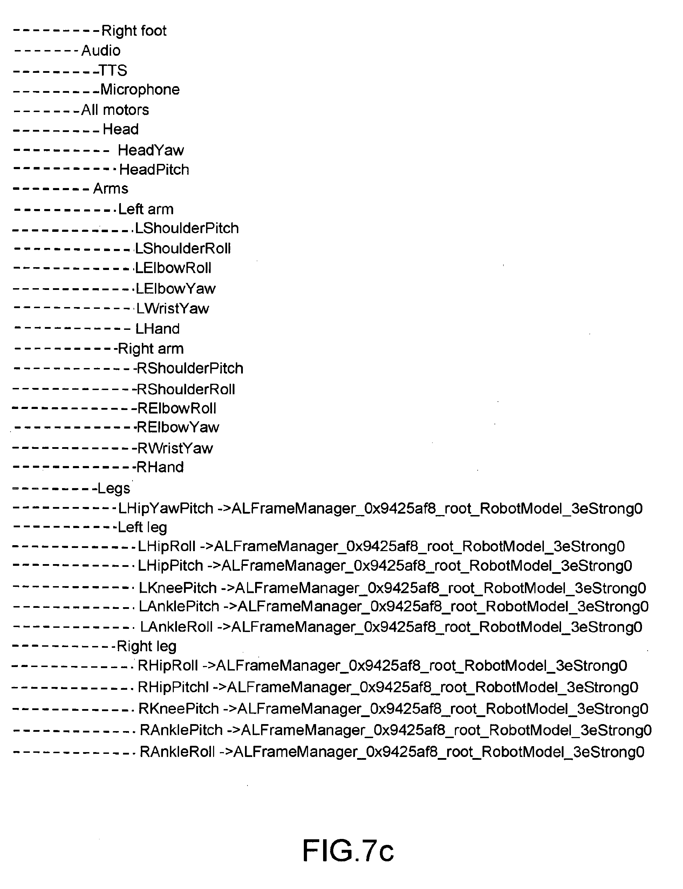

Les figures 7a, 7b et 7c illustrent la problématique de la gestion des ressources absentes, respectivement en représentant un robot complet, un robot tronc et une liste de ressources disponibles/indisponibles, dans plusieurs modes de réalisation de l'invention.

Le Ressource manager peut gérer les modèles de robot en gelant les ressources qui n'existent pas. Dans un mode avantageux de l'invention, il est ainsi possible de réaliser des comportements indépendants du modèle de robot. Une entreprise ne peut en effet pas refaire l'ensemble des comportements de ses clients si le robot change.

Dans le cas d'un modèle de robot disposant de toutes les parties d'un robot complet (tous ses membres en particulier, tel qu'illustré sur la figure 7a), le Resource manager reconnaît que le modèle de robot est complet et ne met pas en oeuvre le mécanisme de gel de ressources.

Dans le cas d'un modèle de robot tronc sans jambes, tel qu'illustré sur la figure 7b, après l'initialisation de l'application, nous obtenons la liste des ressources représentée sur la figure 7c, dans laquelle les ressources correspondant aux jambes absentes du modèle de robot tronc sont gelées (ie non disponibles pour n'importe quel Owner). Elles sont réservées par un comportement tel que LHipYawPitch - >ALFrameManager_0x9425af8_root_RobotModel_3eStrong0 (1^{ère} ligne du sous-ensemble Legs de la liste de ressources de la figure 7c). Ce comportement peut être qualifié d'artefact ou de comportement virtuel dans la mesure où il n'a pas vocation à s'exécuter.

Le même mécanisme de gel, total ou partiel de ressources, peut être appliqué pour gérer les pannes de certaines parties du robot ou les prévenir. Supposons en particulier qu'un moteur de la tête chauffe, un comportement hotEngine occupera alors le moteur en réduisant l'énergie envoyée jusqu'à ce que le moteur refroidisse. De même, si un bras casse, un comportement brokenArm occupera le moteur cassé afin qu'aucun autre comportement ne l'utilise.

Par extension de ce concept de gestion des ressources absentes ou déficientes, on peut définir des ressources essentielles/non essentielles pour un comportement. La disponibilité des ressources déclarées comme essentielles pour un comportement est impérative pour l'exécution dudit comportement. En revanche, ledit comportement pourra être exécuté malgré l'indisponibilité de ressources déclarées comme non essentielles. Par exemple, si un comportement est un Salut comprenant normalement la combinaison d'un message vocal « Bonjour » (Ressource A = Audio), d'un geste du bras droit (Ressource B = RightArm) et de deux pas en avant (Ressource C = LeftLeg ; Ressource D = RightLeg), et que les ressources A et B sont déclarées essentielles et les ressources C et D sont déclarées comme non essentielles, le comportement Salut pourra être exécuté même si les ressources C et D ne sont pas disponibles parce que, par exemple, le robot est en train de marcher.

Si le concept de ressources essentielles/non essentielles est utilisé, un comportement pour lequel des ressources sont définies comme non essentielles et qui sont absentes ou déficientes pourra s'exécuter, alors qu'un comportement pour lequel les mêmes ressources sont déclarées essentielles ne pourra pas s'exécuter. Si un comportement fait appel à la fois à des ressources essentielles et à des ressources non essentielles, il s'exécutera, en fonction de la disponibilité ou pas des ressources non essentielles, de manière différente.

Mais on peut aussi pour obtenir mettre en oeuvre la même fonction définir toutes les ressources comme étant essentielles tout en découpant un comportement en sous comportements. Par défaut, les sous-comportements ne s'exécutent pas si des ressources sont indisponibles. Par défaut également, le comportement global (parent) s'exécutera toujours. Mais on peut modifier l'option par défaut au niveau du comportement parent et des sous-comportements (ou comportements enfants) comme expliqué plus haut.

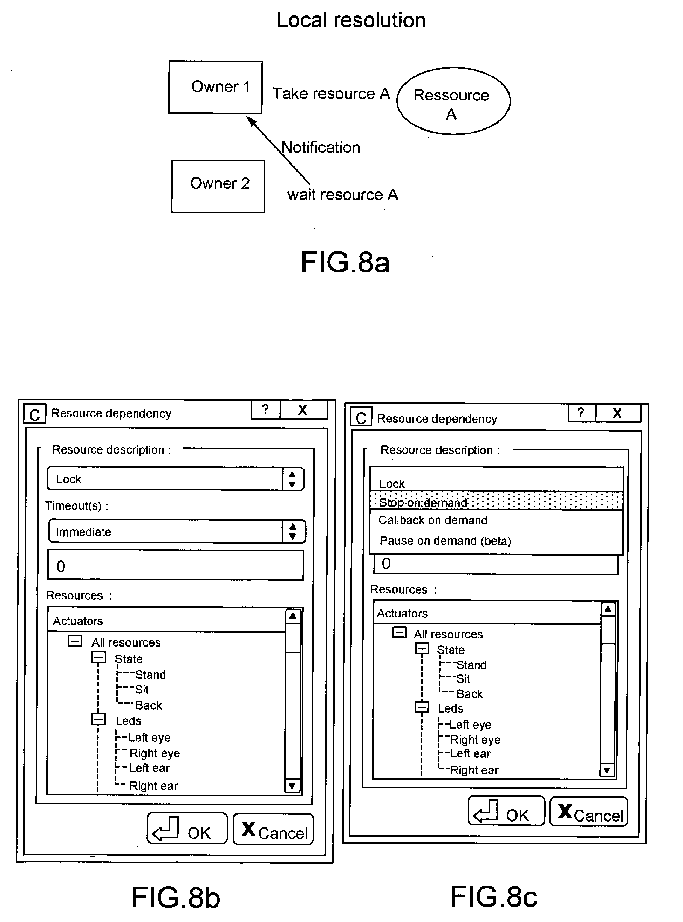

Les figures 8a à 8e illustrent plusieurs modalités de résolution de conflits, respectivement sous forme d'organigramme fonctionnel (8a) et sous forme de menus graphiques déroulants correspondants à différentes options de sortie d'un conflit (8b à 8e), dans plusieurs modes de réalisation de l'invention.

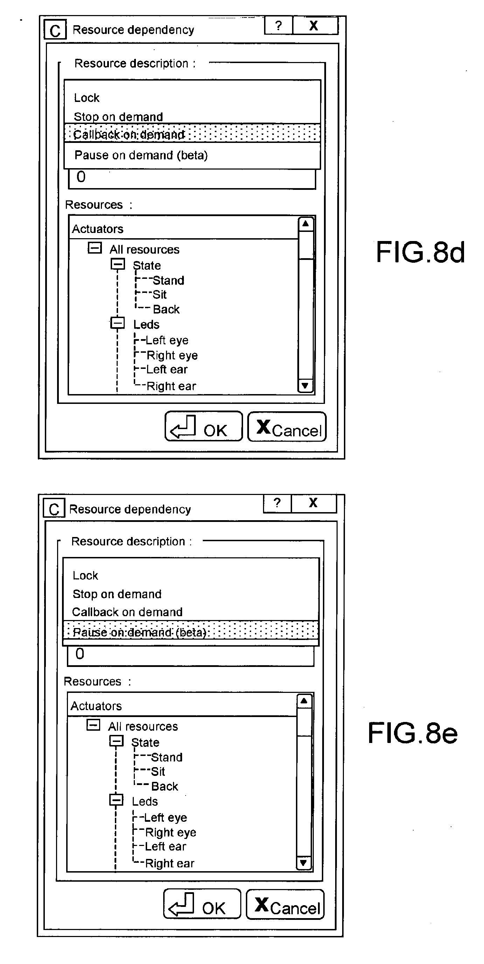

Comme illustré sur la figure 8a, l'approche multi-agent/distribuée permet de s'affranchir d'algorithmes complexes et peu compatibles avec le temps-réel. L'objet ou le comportement résout lui-même le conflit de manière locale. Soit il refuse la requête de ressources par le ou les autres comportements qui les demandent (cas illustré sur la figure 8b). Soit il relâche immédiatement les ressources pour qu'elles puissent être utilisées par un autre comportement qui les demande (cas illustré sur la figure 8c). Soit il exécute au préalable une partie de comportement lui permettant de se mettre en position de stabilité avant de relâcher lesdites ressources (cas illustré sur la figure 8d ; par exemple, lorsqu'un mouvement est en cours, il termine ce mouvement jusqu'à la prochaine position de stabilité). Soit le comportement titulaire des ressources se met en pause et relâche les ressources demandées, la pause durant jusqu'à ce que l'autre comportement prenant les ressources les libère (cas illustré sur la figure 8e). Dans tous les cas dans lesquels les ressources ne sont pas immédiatement relâchées, le comportement demandeur se met en position d'attente de ressources jusqu'à un timeout dont la durée peut être prédéfinie. Dans tous les cas, le deadlock est évité.

La notification est réalisée par un système de callback. En C++ ou en python: Si un owner possède une ressource, il est notifié de la demande dans une callback. Dans Chorégraphe, le comportement est notifié de la demande dans une procédure de callback en fournissant une aide à l'utilisateur en proposant des solutions de résolution dans cette procédure de callback (dont l'utilisateur n'a pas besoin de connaitre l'existence):
* La notification provoque un arrêt du comportement qui possédait la ressource
* La notification ne fait rien, le comportement qui la possédait la garde.
* La notification met en pause le comportement qui possédait la ressource.
* La notification appelle une fonction de l'utilisateur qui fait ce qu'il veut (par exemple se mettre dans une position stable avant de relâcher la ressource). Plus précisément, dans Chorégraphe, les options suivantes sont programmables par un utilisateur:
   - Lock : prendre les ressources sans les relâcher si elles sont demandées par un autre comportement (figure 8b);
   - Stop on demand: prendre les ressources et les relâcher si elles sont demandées (figure 8c) ;
   - Callback on demand : permet d'effectuer n'importe quel code utilisateur en cas de conflit de ressource ; par exemple dans le cas d'une danse, mettre le robot en position stable avant d'arrêter la danse et relâcher les ressources ;
   - Pause on demand : permet de mettre en pause un comportement en cas de conflit de ressource et de reprendre le comportement où
il en était si les ressources sont de nouveau libres.

Par défaut les comportements gardent les ressources. Ceux qui attendent une ressource vont donc attendre la fin du comportement.

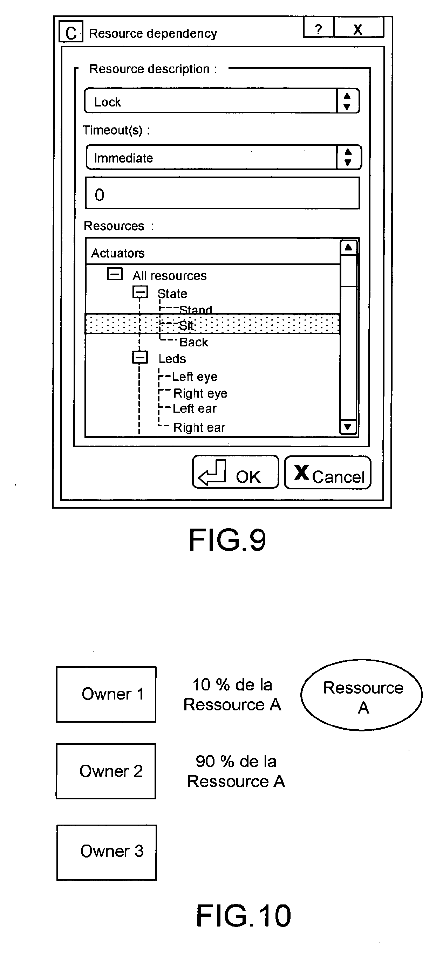

La figure 9 illustre l'utilisation des ressources état sous forme de menu graphique déroulant, dans plusieurs modes de réalisation de l'invention ; Cette figure illustre l'utilisation, dans des modes de réalisation de l'invention, d'un type particulier de ressource, dénommé Ressource Etat.

Éviter des conflits d'utilisation des moteurs, de l'audio, de la vidéo est insuffisant pour protéger un robot humanoïde, en particulier contre des risques de chute pouvant entrainer des pannes ou des casses. Il existe de mécanismes de protection de plus bas niveau, tels que le procédé de gestion des chûtes divulgué par la demande brevet FR/ 1056798 déposée par la demanderesse. Il est cependant avantageux de pouvoir prévenir les chutes. Par exemple, une coupure des moteurs pendant que le robot marche a pour conséquence de faire tomber le robot. Pour prévenir ce type de circonstances, selon l'invention, il est possible de définir une Ressource Etat dont la disponibilité, définie par l'état activé de ladite Ressource Etat est nécessaire pour l'exécution de certains comportements. Une Ressource Etat est partagée (plusieurs objets ou comportements peuvent l'occuper). Un seul état de la ressource (l'état activé) est disponible. Si l'état n'est pas disponible, la ressource répond au même mécanisme précédemment décrit (attente de la ressource jusqu'au timeout et notification de ceux qui occupent la ressource. Dans le cas illustré sur la figure 9, la Ressource Etat est Sit, c'est-à-dire que le robot doit être en position Sit (ou Assis) pour que certains comportements (notamment couper tous les moteurs) puissent être exécutés. Tant que cette ressource n'est pas disponible, le comportement « couper tous les moteurs » ne peut être exécuté (il est désactivé au timeout fixé pour ce comportement).

Dans Chorégraphe, il est donc possible de sélectionner des Ressources Etat. Il est possible de généraliser l'exemple de la figure 9 à d'autres états, tels que: camera1/camera2 (le robot peut être doté de plusieurs caméras de champs différents, dont l'utilisation n'est pertinente que dans certaines positions), branché au secteur/non branché (certaines fonctions nécessitent l'utilisation d'une énergie incompatible avec les ressources autonomes du robot)...

La figure 10 représente un organigramme fonctionnel de l'utilisation d'une ressource accumulative partagée, dans plusieurs modes de réalisation de l'invention.

Cette figure illustre l'utilisation, dans des modes de réalisation de l'invention, d'un type particulier de ressource, dénommé Ressource Accumulative.

Ce type de ressource trouve en particulier application pour optimiser la gestion de la CPU du robot. Les différents utilisateurs ne peuvent pas lancer tous les comportements, ils peuvent le faire en fonction de la disponibilité des ressources (ressource simple comme un moteur), de la position du robot (Ressource Etat), de la CPU (Ressource Accumulative), du réseau (Ressource Accumulative).

Chaque comportement déclare la part de la CPU qu'il occupe, cette CPU étant une ressource partagée comme les ressources de type Ressource Etat. Son utilisation est cependant limitée à 100%. Dans le cas illustré sur la figure 10, Owner 1 déclare utiliser 10% de la Ressource Accumulative A et Owner 2 déclare utiliser 90% de la même Ressource Accumulative A. Owner 3 attend la disponibilité de la Ressource Accumulative A jusqu'à son timeout. Owner 1 et Owner 2 sont notifiés de la requête de Owner 3 et peuvent répondre à la requête par une des options indiquées ci-dessus.

L'invention peut être mise en oeuvre en combinant les différents exemples de réalisation représentés sur les figures et décrits de manière indépendante dans la description. Ainsi, plusieurs comportements ou sous-comprtements réels ou virtuels peuvent être définis et faire appel en combinaison à des ressources simples, des Ressources Etat, des Ressources Accumulatives, qui peuvent être des ressources essentielles ou non essentielles.

Les modes de réalisation de l'invention ont été décrits dans le cas d'un seul robot. Il est cependant possible de généraliser l'application à des cas où plusieurs robots, communiquant entre eux, sont conduits à partager des ressources Ainsi :
- Si nous utilisons les ressources d'un robot, alors n'importe quel robot (client) du système peut interroger le ressource manager des autres robots (serveur) pour prendre une ressource ;
- Les robots peuvent aussi utiliser des ressources virtuelles: une balle par exemple ; dans ce cas, un seul robot serveur doit référencer la ressource balle ; Les autres robots (clients) peuvent alors prendre cette ressource auprès du robot serveur.

Un exemple illustratif du deuxième cas est donné ci-dessous :
- Robot 1 veut prendre la balle (demande au robot serveur) ;
- Robot 1 ne peut pas prendre la balle (timeout) car un autre robot possède la ressource balle.
- Ainsi, deux robots de la même équipe n'essaient donc pas de se disputer la même balle.

Les exemples décrits ci-dessus sont donnés à titre d'illustration de modes de réalisation de l'invention. Ils ne limitent en aucune manière le champ de l'invention qui est défini par les revendications qui suivent.

## Revendications

1. Robot humanoïde apte à exécuter une pluralité de comportements (130, 1310, 1320) sous le contrôle d'un module de gestion embarqué (120) comprenant un sous-module de gestion (1210) d'une pluralité de ressources (140, 1410, 1420) qui peuvent être affectées à l'exécution desdits comportements, ledit robot étant **caractérisé en ce que** ladite pluralité de comportements et ladite pluralité de ressources sont organisés chacune en sous-ensembles hiérarchiques et **en ce que** ledit sous-module de gestion des ressources est apte à être programmé pour réserver au moins une ressource appartenant à au moins un sous-ensemble de ressources à l'exécution d'au moins un comportement appartenant à au moins un sous-ensemble de comportements, ladite réservation pouvant être programmée pour être héritée par ledit sous-ensemble de comportements et/ou s'appliquer audit sous-ensemble de ressources.

2. Robot humanoïde selon la revendication 1, **caractérisé en ce que** ledit sous-module de gestion de la pluralité de ressources est programmé pour répondre, lorsqu'un premier comportement est en cours d'exécution, à une requête de ressource par un deuxième comportement par au moins une des actions suivantes : refus de mise à disposition de ladite ressource audit deuxième comportement, mise à disposition immédiate de ladite ressource audit deuxième comportement, exécution d'au moins une action supplémentaire puis mise à disposition de ladite ressource audit deuxième comportement, mise en pause du premier comportement en cours d'exécution puis mise à disposition de ladite ressource audit deuxième comportement.

3. Robot humanoïde selon la revendication 2, **caractérisé en ce que** ledit sous-module de gestion de la pluralité de ressources est programmé pour que, lorsque l'action de refus de mise à disposition de ladite ressource requise par ledit deuxième comportement est exécutée, ledit deuxième comportement exécute à nouveau une requête de mise à disposition selon une fréquence prédéfinie jusqu'à expiration d'une période d'expiration également prédéfinie.

4. Robot humanoïde selon l'une des revendications 1 à 3, **caractérisé en ce que** ledit sous-module de gestion de la pluralité de ressources est programmé pour, lorsqu'au moins deux comportements exécutent une requête de mise à disposition d'une même ressource, le premier des au moins deux comportements est prioritaire dans la réservation de ladite même ressource lorsque cette dernière est relâchée.

5. Robot humanoïde selon l'une des revendications 1 à 4, **caractérisé en ce que** ledit sous-module de gestion de la pluralité de ressources est programmé pour, lorsqu'au moins un comportement exécute une requête de mise à disposition d'au moins deux ressources, lesdites au moins deux ressources sont regroupées en une nouvelle ressource traitée comme ressource unique, ledit regroupement étant ordonné de manière unique pour tous les comportements exécutant des requêtes de ressources identiques.

6. Robot humanoïde selon l'une des revendications 1 à 5, **caractérisé en ce que** ledit sous-module de gestion de la pluralité de ressources est programmé pour, lorsqu'un comportement parent réserve au moins une ressource sans l'utiliser, ladite au moins une ressource peut être utilisée par un comportement enfant dudit comportement parent.

7. Robot humanoïde selon la revendication 6, **caractérisé en ce que** ledit sous-module de gestion de la pluralité de ressources est programmé pour, lorsqu'un premier comportement enfant utilise une ressource réservée par ledit comportement parent, un deuxième comportement enfant du même parent doit, pour pouvoir utiliser ladite ressource, effectuer une requête de mise à disposition de ladite ressource auprès du premier comportement enfant.

8. Robot humanoïde selon l'une des revendications 6 à 7, **caractérisé en ce que** ledit sous-module de gestion de la pluralité de ressources est programmé pour, lorsqu'un comportement parent relâche une ressource dont il est réservataire, ladite ressource doit être relâchée par tout comportement enfant dudit parent.

9. Robot humanoïde selon l'une des revendications 1 à 8, **caractérisé en ce que** ledit sous-module de gestion de la pluralité de ressources est programmé pour, lorsqu'un sous-ensemble de ressources a une disponibilité réduite, réaliser une réservation desdites ressources pour un comportement virtuel défini en fonction de ladite réduction de disponibilité.

10. Robot humanoïde selon la revendication 9, **caractérisé en ce que** ledit sous-module de gestion de la pluralité de ressources est programmé pour relâcher ladite réservation en fonction de l'évolution de l'état de ladite réduction de disponibilité.

11. Robot humanoïde selon l'une des revendications 1 à 10, **caractérisé en ce que** la pluralité de ressources comprend au moins une variable d'état, ladite au moins une variable devant être dans un état prédéfini pour être réservée, ladite réservation étant nécessaire à l'exécution d'au moins un comportement.

12. Robot humanoïde selon l'une des revendications 1 à 11, **caractérisé en ce que** la pluralité de ressources comprend au moins un ressource accumulative et **en ce qu'**un taux d'utilisation de celle-ci est affecté aux comportements programmés pour utiliser ladite au moins une ressource.

13. Robot humanoïde selon l'une des revendications 1 à 12, **caractérisé en ce que** la pluralité de ressources comprend au moins une ressource essentielle et une ressource non essentielle, tout comportement devant faire appel à la au moins une ressource essentielle ne pouvant s'exécuter si ladite ressource essentielle n'est pas disponible et pouvant s'exécuter s'il doit faire appel à la dite au moins une ressource non essentielle, même si celle-ci n'est pas disponible.

14. Procédé de gestion des ressources d'un robot humanoïde apte à exécuter une pluralité de comportements (130, 1310, 1320) sous le contrôle d'un module de gestion embarqué (120), ledit procédé comprenant une étape de réservation d'une pluralité de ressources (140, 1410, 1420) qui peuvent être affectées à l'exécution desdits comportements, ledit procédé étant **caractérisé en ce que** ladite pluralité de comportements et ladite pluralité de ressources sont organisés chacune en sous-ensembles hiérarchiques et **en ce que** ladite étape de réservation affecte au moins une ressource appartenant à au moins un sous-ensemble de ressources à l'exécution d'au moins un comportement appartenant à au moins un sous-ensemble de comportements, ladite réservation pouvant être programmée pour être héritée par ledit sous-ensemble de comportements et/ou s'appliquer audit sous-ensemble de ressources.

15. Programme d'ordinateur comprenant des instructions de code de programme permettant l'exécution du procédé selon la revendication 14 lorsque le programme est exécuté sur un ordinateur, ledit programme étant adapté pour permettre la gestion des ressources d'un robot humanoïde apte à exécuter une pluralité de comportements (130, 1310, 1320) sous le contrôle d'un sous-programme de gestion embarqué (120), ledit sous-programme comprenant un module (1210) apte à exécuter une fonction de réservation d'une pluralité de ressources (140, 1410, 1420) qui peuvent être affectées à l'exécution desdits comportements, ledit programme étant **caractérisé en ce que** ladite pluralité de comportements et ladite pluralité de ressources sont organisés chacune en sous-ensembles hiérarchiques et **en ce que** ladite fonction de réservation affecte au moins une ressource appartenant à au moins un sous-ensemble de ressources à l'exécution d'au moins un comportement appartenant à au moins un sous-ensemble de comportements, ladite réservation pouvant être programmée pour être héritée par ledit sous-ensemble de comportements et/ou s'appliquer audit sous-ensemble de ressources.

16. Programme d'ordinateur selon la revendication 15, **caractérisé en ce que** lesdits sous-ensembles de comportements et de ressources sont définis comme classes d'objets.

17. Procédé de développement d'un module de gestion (1610) des ressources d'un robot humanoïde apte à exécuter une pluralité de comportements (130, 1310, 1320) sous le contrôle d'un sous-programme de gestion embarqué (120), ledit sous-programme étant apte à exécuter une fonction de réservation d'une pluralité de ressources (140, 1410, 1420) qui peuvent être affectées à l'exécution desdits comportements, ledit procédé étant **caractérisé en ce que** ladite pluralité de comportements et ladite pluralité de ressources sont organisés chacune en sous-ensembles hiérarchiques et **en ce que** ladite fonction de réservation affecte au moins une ressource appartenant à au moins un sous-ensemble de ressources à l'exécution d'au moins un comportement appartenant à au moins un sous-ensemble de comportements, ladite réservation pouvant être programmée pour être héritée par ledit sous-ensemble de comportements et/ou s'appliquer audit sous-ensemble de ressources.

18. Programme d'ordinateur comprenant des instructions de code de programme permettant l'exécution du procédé selon la revendication 17 lorsque le programme est exécuté sur un ordinateur, ledit programme étant adapté pour permettre, par interaction avec un module distant de gestion (1610) des ressources d'un robot humanoïde apte à exécuter une pluralité de comportements (130, 1310, 1320), le paramétrage d'un sous-programme de gestion embarqué (120) sur ledit robot, ledit sous-programme comprenant un module (1210) apte à exécuter une fonction de réservation d'une pluralité de ressources (140, 1410, 1420) qui peuvent être affectées à l'exécution desdits comportements, ledit programme étant **caractérisé en ce que** ladite pluralité de comportements et ladite pluralité de ressources sont organisés chacune en sous-ensembles hiérarchiques et **en ce que** ladite fonction de réservation affecte au moins une ressource appartenant à au moins un sous-ensemble de ressources à l'exécution d'au moins un comportement appartenant à au moins un sous-ensemble de comportements, ladite réservation pouvant être programmée pour être héritée par ledit sous-ensemble de comportements et/ou s'appliquer audit sous-ensemble de ressources.

## Patentansprüche

1. Humanoider Roboter, der zur Durchführung einer Vielzahl von Verhaltensweisen (130, 1310, 1320) unter der Kontrolle eines On-Board-Verwaltungsmoduls (120) imstande ist, das ein Unter-Verwaltungsmodul (1210) einer Vielzahl von Ressourcen (140, 1410, 1420) umfasst, die der Durchführung der Verhaltensweisen zuweisbar sind, wobei der Roboter **dadurch gekennzeichnet ist, dass** die Vielzahl von Verhaltensweisen und die Vielzahl von Ressourcen jeweils in hierarchischen Untergruppen organisiert sind und dass das Unter-Verwaltungsmodul der Ressourcen imstande ist, programmiert zu sein, um mindestens eine Ressource, die zu mindestens einer Untergruppe von Ressourcen gehört, zur Durchführung von mindestens einer Verhaltensweise, die zu mindestens einer Untergruppe von Verhaltensweisen gehört, zu reservieren, wobei die Reservierung programmiert sein kann, um von der Untergruppe von Verhaltensweisen übernehmbar und/oder auf die Untergruppe von Ressourcen anwendbar zu sein.

2. Humanoider Roboter nach Anspruch 1, **dadurch gekennzeichnet, dass** das Unter-Verwaltungsmodul der Vielzahl von Ressourcen programmiert ist, um, wenn sich eine erste Verhaltensweise in Durchführung befindet, auf eine Ressourcenanfrage durch eine zweite Verhaltensweise mit mindestens einer der folgenden Aktionen zu antworten: Verweigerung der Bereitstellung der Ressource an die zweite Verhaltensweise, sofortige Bereitstellung der Ressource an die zweite Verhaltensweise, Durchführung mindestens einer zusätzlichen Aktion und dann Bereitstellung der Ressource an die zweite Verhaltensweise, Unterbrechung der ersten, sich in Durchführung befindenden Verhaltensweise und dann Bereitstellung der Ressource an die zweite Verhaltensweise.

3. Humanoider Roboter nach Anspruch 2, **dadurch gekennzeichnet, dass** das Unter-Verwaltungsmodul der Vielzahl von Ressourcen programmiert ist, damit, wenn die Aktion der Verweigerung der Bereitstellung der von der zweiten Verhaltensweise angeforderten Ressource durchgeführt wird, die zweite Verhaltensweise gemäß einer vorbestimmten Frequenz bis zum Ablauf einer ebenfalls vorbestimmten Ablaufperiode erneut eine Bereitstellungsanfrage durchführt.

4. Humanoider Roboter nach einem der Ansprüche 1 bis 3, **dadurch gekennzeichnet, dass** das Unter-Verwaltungsmodul der Vielzahl von Ressourcen programmiert ist, damit, wenn mindestens zwei Verhaltensweisen eine Bereitstellungsanfrage einer selben Ressource durchführen, die erste der mindestens zwei Verhaltensweisen bei der Reservierung derselben Ressource vorrangig ist, wenn diese freigegeben wird.

5. Humanoider Roboter nach einem der Ansprüche 1 bis 4, **dadurch gekennzeichnet, dass** das Unter-Verwaltungsmodul der Vielzahl von Ressourcen programmiert ist, damit, wenn mindestens eine Verhaltensweise eine Bereitstellungsanfrage von mindestens zwei Ressourcen durchführt, die mindestens zwei Ressourcen in einer neuen Ressource umgruppiert werden, die als einzige Ressource behandelt wird, wobei die Umgruppierung einzig für alle Verhaltensweisen angeordnet wird, die identische Ressourcenanfragen durchführen.

6. Humanoider Roboter nach einem der Ansprüche 1 bis 5, **dadurch gekennzeichnet, dass** das Unter-Verwaltungsmodul der Vielzahl von Ressourcen programmiert ist, damit, wenn eine Eltern-Verhaltensweise mindestens eine Ressource reserviert, ohne sie zu benutzen, die mindestens eine Ressource von einer Kinder-Verhaltensweise der Eltern-Verhaltensweise verwendet werden kann.

7. Humanoider Roboter nach Anspruch 6, **dadurch gekennzeichnet, dass** das Unter-Verwaltungsmodul der Vielzahl von Ressourcen programmiert ist, damit, wenn eine erste Kinder-Verhaltensweise eine von der Eltern-Verhaltensweise reservierte Ressource verwendet, eine zweite Kinder-Verhaltensweise desselben Elternteils eine Bereitstellungsanfrage der Ressource bei der ersten Kinder-Verhaltensweise durchführen muss, um die Ressource verwenden zu können.

8. Humanoider Roboter nach einem der Ansprüche 6 bis 7, **dadurch gekennzeichnet, dass** das Unter-Verwaltungsmodul der Vielzahl von Ressourcen programmiert ist, damit, wenn eine Eltern-Verhaltensweise eine Ressource freigibt, die sie reserviert hatte, die Ressource durch jede Kinder-Verhaltensweise des Elternteils freigegeben werden muss.

9. Humanoider Roboter nach einem der Ansprüche 1 bis 8, **dadurch gekennzeichnet, dass** das Unter-Verwaltungsmodul der Vielzahl von Ressourcen programmiert ist, damit, wenn eine Untergruppe von Ressourcen eine reduzierte Verfügbarkeit hat, eine Reservierung der Ressourcen für eine virtuelle Verhaltensweise durchgeführt wird, die in Abhängigkeit von der Verfügbarkeitsreduktion definiert ist.

10. Humanoider Roboter nach Anspruch 9, **dadurch gekennzeichnet, dass** das Unter-Verwaltungsmodul der Vielzahl von Ressourcen programmiert ist, um die Reservierung in Abhängigkeit von der Entwicklung des Zustands der Verfügbarkeitsreduktion freizugeben.

11. Humanoider Roboter nach einem der Ansprüche 1 bis 10, **dadurch gekennzeichnet, dass** die Vielzahl von Ressourcen mindestens eine Zustandsvariable umfasst, wobei die mindestens eine Variable in einem vorbestimmten Zustand sein muss, um reserviert zu sein, wobei die Reservierung für die Durchführung mindestens einer Verhaltensweise notwendig ist.

12. Humanoider Roboter nach einem der Ansprüche 1 bis 11, **dadurch gekennzeichnet, dass** die Vielzahl von Ressourcen mindestens eine akkumulative Ressource umfasst und dass ein Verwendungsgrad derselben den programmierten Verhaltensweisen zugeordnet ist, um die mindestens eine Ressource zu verwenden.

13. Humanoider Roboter nach einem der Ansprüche 1 bis 12, **dadurch gekennzeichnet, dass** die Vielzahl von Ressourcen mindestens eine wesentliche Ressource und eine nicht wesentliche Ressource umfasst, wobei jede Verhaltensweise, die die mindestens eine wesentliche Ressource anfordern muss, nicht durchführbar ist, wenn die wesentliche Ressource nicht zur Verfügung steht, und durchführbar ist, wenn sie die mindestens eine nicht wesentliche Ressource anfordern muss, auch wenn diese nicht zur Verfügung steht.

14. Verfahren zur Verwaltung der Ressourcen eines humanoiden Roboters, der zur Durchführung einer Vielzahl von Verhaltensweisen (130, 1310, 1320) unter der Kontrolle eines On-Board-Verwaltungsmoduls (120) imstande ist, wobei das Verfahren einen Schritt der Reservierung einer Vielzahl von Ressourcen (140, 1410, 1420) umfasst, die der Durchführung der Verhaltensweisen zuweisbar sind, wobei das Verfahren **dadurch gekennzeichnet ist, dass** die Vielzahl von Verhaltensweisen und die Vielzahl von Ressourcen jeweils in hierarchischen Untergruppen organisiert sind und dass der Schritt der Reservierung mindestens eine Ressource betrifft, die zu mindestens einer Untergruppe von Ressourcen gehört, zur Durchführung von mindestens einer Verhaltensweise, die zu mindestens einer Untergruppe von Verhaltensweisen gehört, wobei die Reservierung programmiert sein kann, um von der Untergruppe von Verhaltensweisen übernehmbar und/oder auf die Untergruppe von Ressourcen anwendbar zu sein.

15. Rechnerprogramm, das Programmcodeinstruktionen umfasst, die die Durchführung des Verfahrens nach Anspruch 14 erlauben, wenn das Programm auf einem Rechner ausgeführt wird, wobei das Programm ausgebildet ist, um die Verwaltung von Ressourcen eines humanoiden Roboters, der zur Durchführung einer Vielzahl von Verhaltensweisen (130, 1310, 1320) unter der Kontrolle eines On-Board-Unter-Verwaltungsprogramms (120) imstande ist, zu erlauben, wobei das Unterprogramm ein Modul (1210) umfasst, das imstande ist, eine Resemierungsfunktion einer Vielzahl von Ressourcen (140, 1410, 1420) durchzuführen, die der Durchführung der Verhaltensweisen zuweisbar sind, wobei das Programm **dadurch gekennzeichnet ist, dass** die Vielzahl von Verhaltensweisen und die Vielzahl von Ressourcen jeweils in hierarchischen Untergruppen organisiert sind und dass die Resemierungsfunktion mindestens eine Ressource betrifft, die zu mindestens einer Untergruppe von Ressourcen gehört, zur Durchführung mindestens einer Verhaltensweise, die zu mindestens einer Untergruppe von Verhaltensweisen gehört, wobei die Reservierung programmiert sein kann, um von der Untergruppe von Verhaltensweisen übernehmbar und/oder auf die Untergruppe von Ressourcen anwendbar zu sein.

16. Rechnerprogramm nach Anspruch 15, **dadurch gekennzeichnet, dass** die Verhaltensweisen- und Ressourcen-Untergruppen als Objektklassen definiert sind.

17. Entwicklungsverfahren eines Verwaltungsmoduls (1610) der Ressourcen eines humanoiden Roboters, der zur Durchführung einer Vielzahl von Verhaltensweisen (130, 1310, 1320) unter der Kontrolle eines On-Board-Unter-Verwaltungsprogramms (120) imstande ist, wobei das Unterprogramm imstande ist, eine Reservierungsfunktion einer Vielzahl von Ressourcen (140, 1410, 1420) durchzuführen, die der Durchführung der Verhaltensweisen zuweisbar sind, wobei das Verfahren **dadurch gekennzeichnet ist, dass** die Vielzahl von Verhaltensweisen und die Vielzahl von Ressourcen jeweils in hierarchischen Untergruppen organisiert sind und dass die Resemierungsfunktion mindestens eine Ressource betrifft, die zu mindestens einer Untergruppe von Ressourcen gehört, zur Durchführung mindestens einer Verhaltensweise, die zu mindestens einer Untergruppe von Verhaltensweisen gehört, wobei die Reservierung programmiert sein kann, um von der Untergruppe von Verhaltensweisen übernehmbar und/oder auf die Untergruppe von Ressourcen anwendbar zu sein.

18. Rechnerprogramm, das Programmcodeinstruktionen umfasst, die die Durchführung des Verfahrens nach Anspruch 17 erlauben, wenn das Programm auf einem Rechner ausgeführt wird, wobei das Programm ausgebildet ist, um durch Interaktion mit einem entfernten Verwaltungsmodul (1610) der Ressourcen eines humanoiden Roboters, der zur Durchführung einer Vielzahl von Verhaltensweisen (130, 1310, 1320) imstande ist, die Parametrierung eines On-Board-Unter-Verwaltungsprogramms (120) dieses Roboters zu erlauben, wobei das Unterprogramm ein Modul (1210) umfasst, das imstande ist, eine Reservierungsfunktion einer Vielzahl von Ressourcen (140, 1410, 1420) durchzuführen, die der Durchführung der Verhaltensweisen zuweisbar sind, wobei das Programm **dadurch gekennzeichnet ist, dass** die Vielzahl von Verhaltensweisen und die Vielzahl von Ressourcen jeweils in hierarchischen Untergruppen organisiert sind und dass die Reservierungsfunktion mindestens eine Ressource betrifft, die zu mindestens einer Untergruppe von Ressourcen gehört, zur Durchführung mindestens einer Verhaltensweise, die zu mindestens einer Untergruppe von Verhaltensweisen gehört, wobei die Reservierung programmiert sein kann, um von der Untergruppe von Verhaltensweisen übernehmbar und/oder auf die Untergruppe von Ressourcen anwendbar zu sein.

## Claims

1. A humanoid robot able to execute a plurality of behaviors (130, 1310, 1320) under the control of an onboard management module (120) comprising a sub-module (1210) for managing a plurality of resources (140, 1410, 1420) which can be assigned to the execution of said behaviors, said robot being **characterized in that** said plurality of behaviors and said plurality of resources are each organized into hierarchical subsets, and **in that** said sub-module for managing the resources is programmable to reserve at least one resource belonging to at least one subset of resources for the execution of at least one behavior belonging to at least one subset of behaviors, said reservation being programmable to be inherited by said subset of behaviors and/or to be applied to said subset of resources.

2. The humanoid robot according to claim 1, **characterized in that** said sub-module for managing the plurality of resources is programmed to respond, when a first behavior is being executed, to a resource request by a second behavior with at least one of the following actions: refusing to make said resource available to said second behavior, immediately making available of said resource to said second behavior, executing at least one additional action and subsequently making available said resource to said second behavior, pausing of the first behavior being executed and subsequently making available of said resource to said second behavior.

3. The humanoid robot according to claim 2, **characterized in that** said sub-module for managing the plurality of resources is programmed so that, when the action of refusal to make available said resource requested by said second behavior is executed, said second behavior again executes a request to make available according to a predefined frequency until expiry of a likewise predefined expiry period.

4. The humanoid robot according to one of claims 1 to 3, **characterized in that** said sub-module for managing the plurality of resources is programmed so that, when at least two behaviors execute a request to make one and the same resource available, the first of the at least two behaviors has priority in the reservation of said same resource when the latter is released.

5. The humanoid robot according to one of claims 1 to 4, **characterized in that** said sub-module for managing the plurality of resources is programmed so that, when at least one behavior executes a request to make at least two resources available, said at least two resources are regrouped into a new resource treated as a single resource, said regrouping being ordered in a unique manner for all the behaviors executing identical resources requests.

6. The humanoid robot according to one of claims 1 to 5, **characterized in that** said sub-module for managing the plurality of resources is programmed so that, when a parent behavior reserves at least one resource without using it, said at least one resource can be used by a child behavior of said parent behavior.

7. The humanoid robot according to claim 6, **characterized in that** said sub-module for managing the plurality of resources is programmed so that, when a first child behavior uses a resource reserved by said parent behavior, a second child behavior of the same parent must, so as to be able to use said resource, perform a request to the first child behavior to make said resource available.

8. The humanoid robot according to one of claims 6 to 7, **characterized in that** said sub-module for managing the plurality of resources is programmed so that, when a parent behavior releases a resource of which it has previously reserved, said resource must be released by any child behavior of said parent.

9. The humanoid robot according to one of claims 1 to 8, **characterized in that** said sub-module for managing the plurality of resources is programmed so as, when a subset of resources has reduced availability, to carry out a reservation of said resources for a virtual behavior defined according to said reduction in availability.

10. The humanoid robot according to claim 9, **characterized in that** said sub-module for managing the plurality of resources is programmed so as to release said reservation according to the evolution of the state of said reduction in availability.

11. The humanoid robot according to one of claims 1 to 10, **characterized in that** the plurality of resources comprises at least one state variable, said at least one variable having to be in a predefined state so as to be reserved, said reservation being necessary for the execution of at least one behavior.

12. The humanoid robot according to one of claims 1 to 11, **characterized in that** the plurality of resources comprises at least one accumulative resource and **in that** a rate of use of the latter is assigned to the behaviors programmed so as to use said at least one resource.

13. The humanoid robot according to one of claims 1 to 12, **characterized in that** the plurality of resources comprises at least one essential resource and one non-essential resource, any behavior having to call upon the at least one essential resource being unable to execute if said essential resource is not available and being able to execute if it must call upon said at least one non-essential resource, even if the latter is not available.

14. A method for managing the resources of a humanoid robot able to execute a plurality of behaviors (130, 1310, 1320) under the control of an onboard management module (120), said method comprising a step of reservation of a plurality of resources (140, 1410, 1420) which can be assigned to the execution of said behaviors, said method being **characterized in that** said plurality of behaviors and said plurality of resources are each organized into hierarchical subsets, and **in that** said reservation step assigns at least one resource belonging to at least one subset of resources to the execution of at least one behavior belonging to at least one subset of behaviors, said reservation being programmable so as to be inherited by said subset of behaviors and/or to be applied to said subset of resources.

15. A computer program comprising program code instructions allowing the execution of a method according to claim 14 when the program is executed on a computer, said program being adapted to carry out the management of the resources of a humanoid robot able to execute a plurality of behaviors (130, 1310, 1320) under the control of an onboard management subprogram (120), said subprogram comprising a module (1210) configured to execute a function for a reservation of a plurality of resources (140, 1410, 1420) which can be assigned to the execution of said behaviors, said program being **characterized in that** said plurality of behaviors and said plurality of resources are each organized into hierarchical subsets and **in that** said reservation function assigns at least one resource belonging to at least one subset of resources to the execution of at least one behavior belonging to at least one subset of behaviors, said reservation being programmable to be inherited by said subset of behaviors and/or to be applied to said subset of resources.

16. The computer program according to claim 15, **characterized in that** said subsets of behaviors and of resources are defined as classes of objects.

17. A method for developing a module (1610) for managing the resources of a humanoid robot able to execute a plurality of behaviors (130, 1310, 1320) under the control of an onboard management subprogram (120), said subprogram being configured to execute a function for reserving a plurality of resources (140, 1410, 1420) which can be assigned to the execution of said behaviors, said method being **characterized in that** said plurality of behaviors and said plurality of resources are each organized into hierarchical subsets and **in that** said reservation function assigns at least one resource belonging to at least one subset of resources to the execution of at least one behavior belonging to at least one subset of behaviors, said reservation being programmable to be inherited by said subset of behaviors and/or to be applied to said subset of resources.

18. A computer program comprising program code instructions configured for allowing the execution of the method according to claim 17 when the program is executed on a computer, said program being adapted to carry out, by interaction with a remote module (1610), the management of the resources of a humanoid robot configured to execute a plurality of behaviors (130, 1310, 1320), the parameterization of an onboard management subprogram (120) aboard said robot, said subprogram comprising a module (1210) configured to execute a function for reserving a plurality of resources (140, 1410, 1420) which can be assigned to the execution of said behaviors, said program being **characterized in that** said plurality of behaviors and said plurality of resources are each organized into hierarchical subsets and **in that** said reservation function assigns at least one resource belonging to at least one subset of resources to the execution of at least one behavior belonging to at least one subset of behaviors, said reservation being programmable to be inherited by said subset of behaviors and/or to be applied to said subset of resources.
